# EUROPEAN PATENT APPLICATION

(11) **EP 1 968 297 A1**
(43) Date of publication of application: **10.09.2008**
(21) Application number: 08151735.1
(22) Date of filing: 21.02.2008
(51) Int. Cl.: H04N 1/00, B41J 3/44

(54) **Multi-function photo center**

(30) Priority: 08.03.2007 US 715585
(71) Applicant: Xerox Corporation, Rochester, New York 14644 (US)
(72) Inventor: Parker, Leonard A., Pittsford, New York 14534 (US)
(74) Representative: Grünecker, Kinkeldey, Stockmair & Schwanhäusser Anwaltssozietät

(57) **Abstract**

An integrated multi-function digital photo device comprises a display unit, a printing unit, a housing, and a frame. The integrated device provides for the display and printing of digital photos in one device rather than in multiple devices.

## Description

### BACKGROUND

Photographs, especially digital photographs, have become ubiquitous. Several functions arise in handling digital photos. A repository is needed to store digital photos and organize them logically, chronologically, or categorically. A filing system is needed to locate desired digital photos, especially considering that a consumer may have several hundred or several thousands of digital photos. A device for viewing the digital photo is needed. Finally, a printer is needed for printing out digital photos which may be placed in a picture frame or given to another person.

These functions do not exist in an integrated fashion and are generally only available on multiple devices. For example, laptops, personal computers, photo printers, and digital photo frames incorporate some of these functions, but not all of them. In addition, such devices are generally not designed to be acceptable as permanent attractive displays in living room settings or as fine furniture accessories for office / lobby / gift shop settings.

### BRIEF DESCRIPTION

The present disclosure is directed towards integrated apparatuses which allow users to store, display, and locally print digital photos.
In one embodiment of the photo device of claim 1, the housing further comprises a tray which allows paper to be inserted into the printing unit.
In a further embodiment the photo device has the ability to store digital photos in logical or chronological folders.
In a further embodiment the photo device has the ability to display a static digital photo, a closed loop slide show, or streaming video.
In a further embodiment the housing comprises a display housing and a base, and the display housing is rotatable relative to the base.
In a further embodiment the photo device further comprises an audio unit for providing sound.
In one embodiment of the photo device of claim 10, the device further comprises a storage unit for storing digital photo information.
In a further embodiment the storage unit is non-volatile memory.
In a further embodiment the photo device further comprises an interface unit for communicating with an external source.

These and other embodiments are described in more detail below.

### BRIEF DESCRIPTION OF THE DRAWINGS

The following is a brief description of the drawings, which are presented for the purposes of illustrating the exemplary embodiments disclosed herein and not for the purposes of limiting the same.

FIGURE 1 is a rear view of an embodiment of the integrated multi-function digital photo device of the present disclosure.

FIGURE 2 is a side view of an embodiment of the integrated multi-function digital photo device of the present disclosure.

FIGURE 3 is a front view of an embodiment of the integrated multi-function digital photo device of the present disclosure.

FIGURE 4 is a schematic diagram of the internal architecture of an embodiment of the integrated multi-function digital photo device of the present disclosure.

### DETAILED DESCRIPTION

A more complete understanding of the components, processes and apparatuses disclosed herein can be obtained by reference to the accompanying drawings. These figures are merely schematic representations based on convenience and the ease of demonstrating the present disclosure, and are, therefore, not intended to indicate relative size and dimensions of the devices or components thereof and/or to define or limit the scope of the exemplary embodiments.

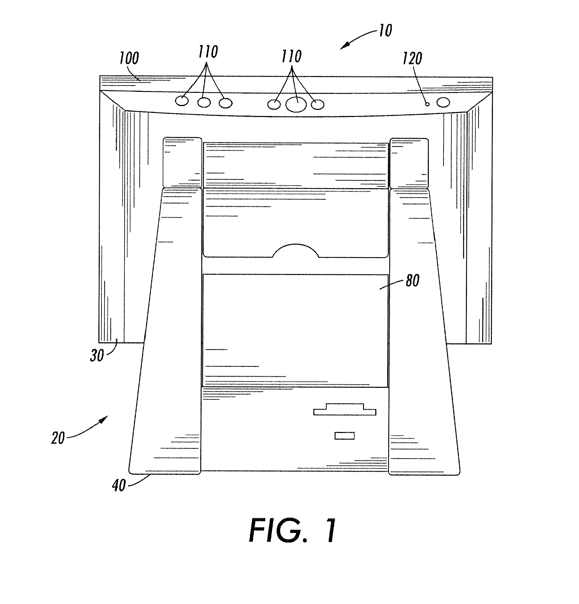

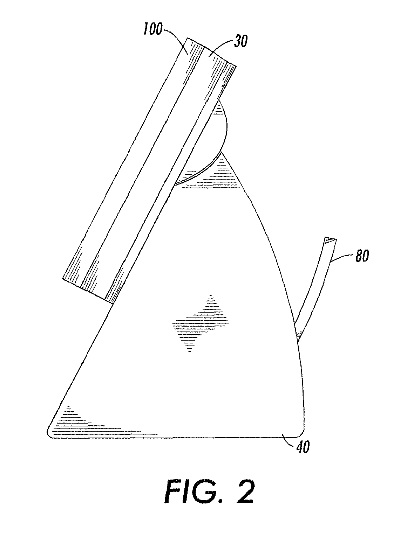

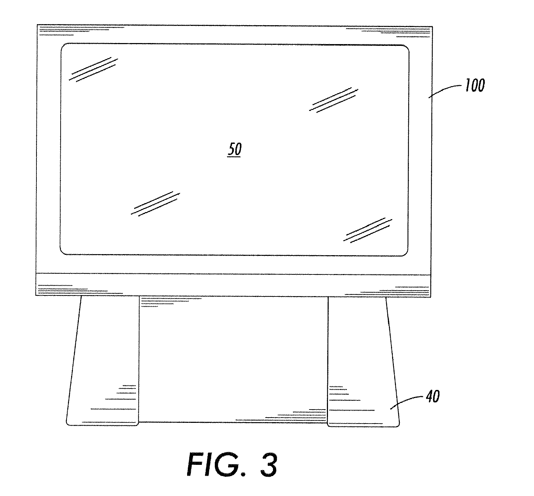

FIGURES 1-3 are various views of an exemplary embodiment of the present disclosure. The multi-function digital photo device **10** has a housing **20.** The housing comprises a display housing **30** and a base **40.** The display housing **30** and the base **40** may be rotated relative to each other. The display unit **50** is located in the display housing **30.** The device **10** may have a storage unit **60** (not shown) for storing the digital photos. The printing unit **70** (not shown) is located in the base **40.** As seen here, the base **40** of the housing **20** may further comprise a tray **80;** the tray allows paper to be inserted into the housing **20** to be printed upon by the printing unit **70** and supports the paper. Generally, the paper is inserted in the rear of the housing **20** and exits from the front of the housing **20.** The base **40** may further comprise a door (not shown) if additional access to the interior of the housing **20** is required. For example, a door may be separate from the tray **80** depending on the configuration of the printing unit **70,** in particular the location of any ink supply which may need to be refilled. The device **10** comprises a frame **100** which frames or surrounds the display unit **50.** The frame **100** may be integral with the housing **20** or it may be located outside the housing **20.** For example, it may be desirable that the frame **100** can be switched or replaced for aesthetic purposes. The device **10** may further comprise various buttons **110** and/or lights **120** to allow the user to interact with the device **10.** The device **10** also comprises a processor **130.** The processor **130** can control the display unit **50** and generally is connected to all components of the device **10.** The processor **130** can control the display unit **50** so that, for example, either a single static photo is displayed or a "slide show" is shown. The processor **130** also allows the display unit **50** to show streaming video and provides image enhancement technology so that the digital photos/video are of a higher quality than without the enhancement.

The multi-function digital photo device **10** may further comprise a storage unit **60** which stores digital photo information. The storage unit can be any device known in the art. For example, the storage unit can be non-volatile memory such as flash memory, EEPROM, or RAM. It is also contemplated that the photo device **10** does not have a storage unit, but that a storage unit containing digital photos is plugged into the photo device **10.** For example, the photo device **10** may have a USB port or a card adapter so that storage devices such as a memory stick, an SD card, and the like can be plugged.

The display unit **50** is a flat-panel display and may use any type of display known in the art. For example, the flat-panel display can be liquid crystal display (LCD), plasma, or digital light processing (DLP). The display unit **50** generally has rectangular dimensions. The display unit may have a diagonal length from 4 inches to as large as 50 inches.

The printing unit **70** allows the user to immediately and locally print a digital photo for a person who sees a digital photo and wishes they had a copy. The printing unit **70** may be any unit known in the art. For example, the printing unit can be a liquid inkjet printer, a laser printer, a solid inkjet printer, or a dye-sublimation printer. The printing unit will generally include a print head, an ink supply, a motor, and a belt.

The device **10** may further comprise an interface unit **150.** It is contemplated, for example, that the printing unit **70** be used for low volume, high quality, immediate printing, but that high volume printing be fulfilled via web-based print ordering. The interface unit **150** allows the device **10** to communicate with an external source. For example, the interface unit **150** may be a jack, such as a jack for receiving an Ethernet cable, which allows the device **10** to be connected to the Internet. The interface unit **150** may also be a wireless receiver **140** for wireless connection to the Internet or to a computer which contains the storage unit **60.** The photo device **10** may, if desired, comprise both a wireless receiver **140** and an interface unit **150** as well.

The housing **20** may, of course, contain any number of slots and/or holes necessary for the various components of the device **10** to operate or communicate with the user. The tray **80** may serve as a temporary tray upon which paper is laid for prints to be made, then be folded up to reduce the footprint of the photo device **10.** However, the tray **80** could also serve as a feeder which stores paper. The photo device **10** may receive power either from a battery source or via an AC adapter which is plugged into an electrical outlet. The device **10** may further comprise an audio unit, such as speakers, for providing sound. For example, streaming video may have a soundtrack or narration may be provided for a picture slide show. The audio unit may be located in either the display housing **30** or the base **40** of the housing **20.**

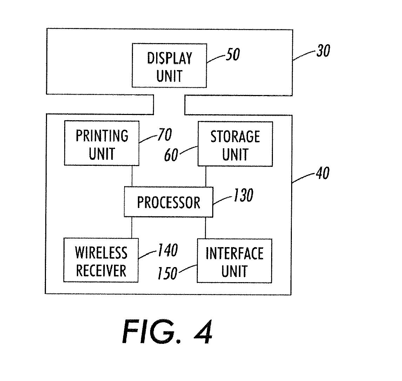

FIGURE 4 is a schematic diagram of the internal architecture of one embodiment of the photo device **10.** In this embodiment, the display unit **50** is in the display housing **30.** The printing unit **70,** processor **130,** wireless receiver **140,** and interface unit **150** are located in the base **40.** While the display unit **50** is located in the display housing **30** and the printing unit **70** is located in the base **40,** the other components may be located in any part of the housing **20.** In this embodiment, the photo device **10** comprises a storage unit **60** which is shown in the housing **20.**

The integrated multi-function digital photo device of the present disclosure is very useful. It allows users to electronically transfer or load digital photos, thus serving as a photo repository. It has the capability to sort and store photos in logical and/or chronological folders, thus serving as an electronic filing system for digital photo albums. It can display a single static photo, a slide show of photos, or streaming video. The images may be enhanced. It also allows for integrated low-volume printing or high-volume printing via web-based print ordering.

## Claims

1. An integrated multi-function digital photo device, comprising:
a housing, a frame, a display unit, a processor, and a printing unit;
the display unit, processor, and printing unit being located within the housing; and
the frame framing the display unit.

2. The photo device of claim 1, further comprising a storage unit for storing digital photo information.

3. The photo device of claim 2, wherein the storage unit is non-volatile memory.

4. The photo device of claim 1, further comprising an interface unit for communicating with an external source.

5. The photo device of claim 4, wherein the interface unit is a jack.

6. The photo device of claim 4, wherein the interface unit is a wireless receiver.

7. The photo device of claim 1, further comprising a wireless receiver and an interface unit.

8. The photo device of claim 1, wherein the frame is located outside the housing.

9. The photo device of claim 1, wherein the display unit is a flat panel display.

10. An integrated multi-function digital photo device, comprising:
a housing, a frame, a display unit, a processor, and a printing unit;
the display unit being located in a display housing of the housing and framed by the frame;
the processor and printing unit being located within a base of the housing;
the housing further comprising a tray for inserting paper into the printing unit; and
the display housing being rotatable relative to the base.
